# EUROPEAN PATENT SPECIFICATION

(11) **EP 3 348 917 B1**
(45) Date of publication and mention of the grant of the patent: **23.11.2022**
(21) Application number: 16843664.0
(22) Date of filing: 08.09.2016
(51) Int. Cl.: F24F 1/00, F24F 1/0014, F24F 1/0033, F24F 11/00, F24F 11/64, F24F 11/65, F24F 11/77, F24F 11/74, F24F 1/0043, F24F 110/10

(54) **AIR VOLUME REGULATION METHOD**
LUFTVOLUMENREGELUNGSVERFAHREN
PROCÉDÉ DE RÉGULATION DE VOLUME D'AIR

(30) Priority: 11.09.2015 CN 201510578301
(43) Date of publication of application: 18.07.2018
(73) Proprietor: Gree Electric Appliances, Inc. of Zhuhai, Zhuhai, Guangdong 519070 (CN)
(72) Inventor: LV, Feihu, Zhuhai City Guangdong 519070 (CN); WU, Yanliang, Zhuhai City Guangdong 519070 (CN); WU, Shuming, Zhuhai City Guangdong 519070 (CN)
(74) Representative: Zacco GmbH
(86) International application number: PCT/CN2016/098407
(87) International publication number: WO 2017/041726

(56) References cited:
- EP-A2- 2 679 920
- EP-B1- 1 703 217
- CN-A- 101 650 064
- CN-A- 103 307 713
- CN-A- 103 512 155
- CN-A- 103 776 094
- CN-A- 104 776 575
- CN-A- 105 240 930
- CN-U- 202 792 281
- CN-U- 202 973 363
- CN-U- 204 006 499
- GB-A- 2 211 289
- JP-A- S63 161 343
- US-A1- 2014 360 212

## Description

### Technical Field

The disclosure relates to an air conditioning technology, and particularly to an air volume regulation method according to the preamble of claim 1.

### Background

A cabinet air conditioner mainly comprises an evaporator and an internal fan. When the cabinet air conditioner works, a liquid coolant is vaporized after reaching the evaporator, thereby generating a low-temperature gaseous coolant and simultaneously absorbing a large amount of heat to reduce a temperature of the evaporator. The internal fan supplies a cold air around the evaporator into a room, thereby changing an environmental temperature in the room.

An internal unit of an existing cabinet air conditioner mostly adopts only one internal fan, for example, an alternating current internal fan or a direct current internal fan. Different control manners are adopted for different types of internal fans. The alternating current internal fan is easy to control, a tapped motor is mostly adopted, and different voltages are applied for speed regulation. The control manner for the alternating current internal fan mostly adopts open loop control, wherein there are no corresponding detection and feedback signals such as a rotating speed. Therefore, the control manner for the direct current internal fan is relatively complicated. For example, a Hall sensor provided in a motor detects and feeds back a rotating speed to a main unit to implement closed loop control. Although a motor control method for a single internal fan has been widely applied, an air volume which may be provided by the single internal fan is limited. For development of a type which requires a relatively larger air volume and is higher in cooling and heating speed, it is necessary to improve power of a motor and/or increase a rotating speed of the motor. This makes the single internal fan more complicated in control and larger in size. For further increasing the air volume, a plurality of fans are required for cooperative control. During design, a plurality of internal fans may be adopted to simultaneously work to achieve an air outlet and cooling speed required by a system, namely implementing so-called integrated air volume control.

However, when the plurality of fans simultaneously work to achieve the air outlet and cooling speed required by the system, the plurality of fans are simultaneously started and work at relatively low rotating speeds, which makes the fans in a low-efficiency state.

GB2211289A discloses a separate air-conditioner, the separate air-conditioner includes a heat exchanger, an upper fan, a lower fan, the first air flow control for controlling the upper and lower fans in an initial heating period such that the ratio of an upper air flow from the upper fan to a total air flow from both the upper and lower fans decreases as the total air flow increases; and the second air flow control for controlling the upper and lower fans in a stable heating state such that the rario increases as the total air flow increases. The first air flow control controls the upper and lower fans in a cooling operation such that the upper air flow is inversely proportional to the total air flow, while the second air flow control controls the upper and lower fans in a heating operation such that the upper air flow is proportional to the total airflow.

### Summary

In view of this, the invention provides an air volume regulation method for an air volume regulation device according to claim 1.

To this end, the invention adopts the following technical solutions.

According to the known background prior art, an air volume regulation device is provided, which comprises: a fan system provided in a cabinet air conditioner, an upper air outlet provided in an upper part of the cabinet air conditioner, a lower air outlet provided in a lower part of the cabinet air conditioner and a control system configured to control a fan, wherein the fan system comprises a plurality of fans driven by motors respectively, and a port of each of the plurality of fans is communicated with a main air passage formed by at least a part of an air conditioner housing; and the control system controls each of the plurality of fans to execute at least one operation of starting, stopping and power regulation, thereby regulating an outlet air volume.

According to an aspect of the invention, an air volume regulation method according to claim 1 for the abovementioned air volume regulation device is provided.

According to the invention, air volume regulation control of the whole machine is implemented through multiple groups of independently controlled motors and an air door capable of opening and closing the lower air outlet. The control system controls different input power of the multiple motors to change different rotating speeds and air volumes to implement air volume regulation; and through the air door structure of the lower air outlet, during closing, only the upper air outlet is opened to reduce the air volume, or the air door is closed after the upper and lower air outlets are both opened for a period of time, to regulate the air volume. According to the invention, integrated air volume control of the multiple fans may be implemented; optimized real-time control may be implemented according to the working stage of the air conditioning system, so as to improve comfort; and whether to turn off part of the fans in a subsequent stage or not may be judged according to a current running rotating speed of each of the fans to improve energy efficiency, achieve energy saving and avoid a low-efficiency state that the multiple fans are simultaneously started but all work at relatively low rotating speeds.

### Brief Description of the Drawings

Embodiments of the disclosure are described below with reference to the drawings to make the abovementioned and other purposes, characteristics and advantages of the disclosure clearer.
Fig. 1 is a structure schematic diagram of an air volume regulation device of a cabinet air conditioner according to an embodiment of the invention;
Fig. 2 is a structure schematic diagram of a fan system of an air volume regulation device according to an embodiment of the invention;
Fig. 3a and Fig. 3b are part views of an air door structure of an air volume regulation device according to an embodiment of the invention;
Fig. 4 is a more detailed part view of an air door structure of an air volume regulation device according to an embodiment of the invention;
Fig. 5 is a schematic diagram of a control system of an air volume regulation device according to an embodiment of the invention; and
Fig. 6 is a flowchart of an air volume regulation method according to an embodiment of the invention.

### Detailed Description of the Embodiments

The invention will be described below on the basis of the embodiments, but the disclosure is not limited to these embodiments. In the detailed descriptions made to the disclosure below, some specific detailed parts are described in detail. Those skilled in the art may still completely understand the disclosure even without these descriptions about the detailed parts. For avoiding confusion about the essence of the disclosure, known methods, processes, flows and elements are not described in detail.

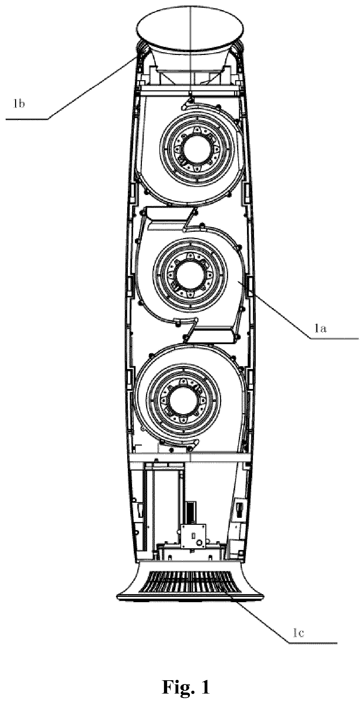

Fig. 1 is a structure diagram of an air volume regulation device of a cabinet air conditioner according to an embodiment of the invention. As shown in Fig. 1, the air volume regulation device comprises a fan system 1a provided in the cabinet air conditioner, and an upper air outlet 1b and a lower air outlet 1c provided at an upper part and a lower part of the cabinet air conditioner respectively.

The cabinet air conditioner is provided with a main air passage formed by at least a part of a housing. The upper air outlet 1b and the lower air outlet 1c are provided in an upper end and a lower end of the main air passage respectively. In general, air outlet areas of the upper air outlet 1b and the lower air outlet 1c are different. The lower air outlet 1c may be selectively opened or closed, so that the cabinet air conditioner may provide multiple air outlet modes, for example, only the upper air outlet is opened, or the upper air outlet and the lower air outlet is opened, and comfort is improved. For example: in case of rapid cooling of the air conditioner, the upper air outlet and the lower air outlet are simultaneously opened; in case of relatively low cooling capacity of the air conditioner, only the upper air outlet is opened; in case of rapid heating of the air conditioner, the upper air outlet and the lower air outlet are simultaneously opened; and in case of relatively low heating capacity of the air conditioner, only the lower air outlet is opened.

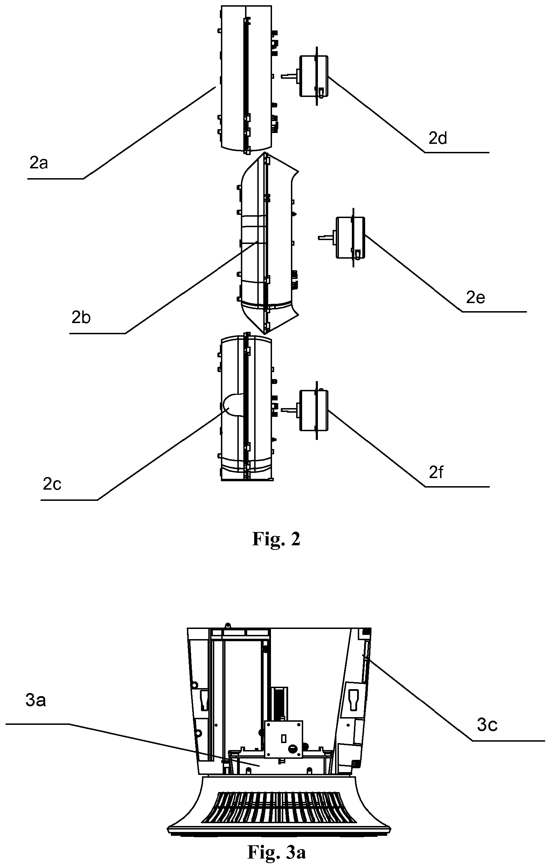

Fig. 2 is a structure schematic diagram of a fan system in an air volume regulation device according to an embodiment of the invention. The fan system 1a comprises a plurality of fans driven by motors respectively, which are sequentially provided from a top to a bottom. A port of each of the plurality of fans is communicated with the main air passage. The fan system shown in Fig. 1 and 2 comprises an upper, a middle and a lower totally three fans 2a-2c. The upper fan 2a is only provided with an upper port, the lower fan 2c is only provided with a lower port, and the middle fan 2b is provided with an upper port and a lower port. The upper fan 2a and the middle fan 2b provide airflows blown from the upper air outlet together, and the lower fan 2c and the middle fan 2b provide airflows blown from the lower air outlet together.

The three fans in the fan system are driven by three motors respectively, i.e. an upper motor 2d, a middle motor 2e and a lower motor 2f. Power of the motors is regulated to control outlet air volumes of the upper fan 2a, the middle fan 2b and the lower fan 2c respectively, thereby regulating outlet air volumes of the upper air outlet 1b and the lower air outlet 1c respectively. During heating, input power of the motors 2d, 2e and 2f are the same, and a hot air volume of the lower air outlet is large. Because hot air floats, indoor comfort is relatively high. Under a cooling condition, such a motor power combination has a shortcoming. There is less cold air at an upper part and more cold air at a lower part, and the cold air cannot effectively sink, so that the indoor comfort is not so high. Therefore, during cooling, the input power of the motors 2d, 2e and 2f is regulated, the input power of the upper motor 2d is increased, the input power of the middle power 2e is kept unchanged, and the input power of the lower motor 2f is reduced. Thus, an air volume of the upper air outlet is larger than an air volume of the lower air outlet, and the cooling comfort is improved.

In the embodiment, the three fans which are provided from top to bottom are described. However, a number of the fans is not limited, and two or more fans may be provided in the main air passage. The multiple fans may be vertically provided or horizontally provided in the main air passage according to a shape and size of the main air passage. For avoiding airflow interference between the fans, the fans provided at the upper part are only provided with upper ports, and are configured to provide airflows flowing upwards, and the fans provided at the lower part are only provided with lower ports, and are configured to provide airflows flowing downwards.

It is important to note that a fan provided at the middle part is provided with the upper port and the lower port and configured to simultaneously provide the airflows flowing upwards and downwards in the embodiment. However, the fan provided at the middle part is only optional, and the fan comprises two ports, so that the number of the fans used in the main air passage may be reduced, cost may be reduced, and an efficient air volume control method may be provided.

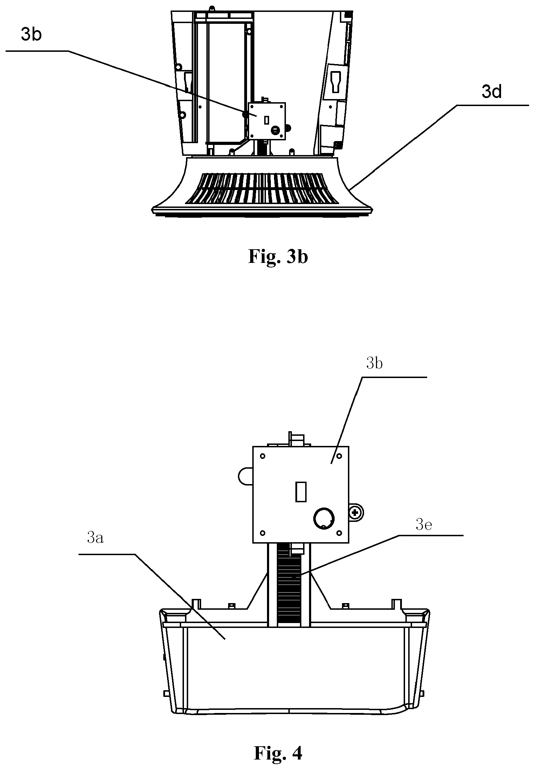

Fig. 3a and Fig. 3b are part views of an air door structure of an air volume regulation device according to an embodiment of the invention, and Fig. 4 is a more detailed part view of an air door structure of an air volume regulation device according to an embodiment of the disclosure. As shown in Fig. 3a and Fig. 3b, the air door structure is provided in a housing 3c of the cabinet air conditioner, and is provided in a vicinity of a base 3d of the cabinet air conditioner. As shown in Fig. 4, the air door structure comprises a baffle plate 3a, an air door motor 3b and a rack 3e. The baffle plate 3a is fixed at a tail end of the rack 3e, and a driving gear of the air door motor 3b is meshed with the rack 3e, thereby driving the rack 3e to move up and down. Correspondingly, the baffle plate 3e moves to different positions along with the rack 3e, thereby opening or closing the lower air outlet. Preferably, the baffle plate 3a and the lower air outlet are consistent in shape, so that airflows between the main air passage and the lower air outlet may be better cut off in a closed state. Preferably, a sealing ring mounting part is provided on the baffle plate 3e. The sealing ring mounting part is configured to mount a sealing ring to implement sealing in the closed state, thereby avoiding air leakage.

Preferably, an additional guide structure is provided on the housing 3c, for example, a grooved structure. An edge of the baffle plate 3a is matched with the grooved structure, and slides along the grooved structure. The guide structure may also be provided to be another structure with a guide function, such as a guide block.

Adopting the air door structure may implement multiple air outlet modes, thereby improving the comfort. For example, in a cooling mode, before an indoor temperature gets nearly constant, for preventing a condition that a temperature close to the ground is excessively low and makes people feel freezing, it is necessary to close an air door 3a at the lower air outlet under driving of the air door motor 3b, then the lower air outlet is in a closed state, and air is only blown from the upper air outlet.

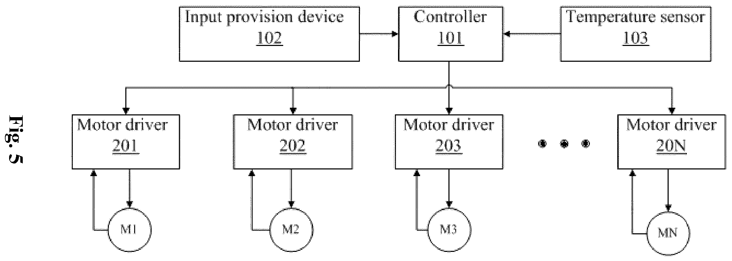

Fig. 5 is a schematic diagram of a control system of an air volume regulation device according to an embodiment of the invention. The control system comprises a controller 101, an input provision device 102, a temperature sensor 103 and a plurality of motor drivers 203-20N. A plurality of motors M1-MN are also shown in Fig. 5, and are configured to drive the plurality of fans shown in Fig. 1 respectively.

The controller 101 comprises a master control chip, for example, a single-chip microcomputer and a Digital Signal Processor (DSP). The controller 101 receives a user instruction from the input provision device 102, receives an environmental sensing signal from the temperature sensor 103, and generates a control signal according to the received user instruction and environmental sensing signal.

The controller 101 provides the control signal for the motor drivers 201-20N to control running of the fans.

The input provision device 102 may be any piece of user input equipment, for example, a remote controller and a mobile phone, and is configured to provide the user instruction for the cabinet air conditioner, for example, starting, stopping, lower air blowing and air volume regulation of the air conditioner.

The temperature sensor 103 is used to detect the environmental temperature, for example, a sensitive element comprising a thermistor.

The motor drivers 201-20N are connected with the motors M1-MN respectively. On one hand, the motor drivers provide power supply voltages for the motors, so that the motors may run. On the other hand, the motor drivers obtain feedback signals from the motors respectively, running parameters of the motors may be regulated. The feedback signals of the motors are, for example, rotating speed signals. In an example, Hall sensors are provided on rotors of the motors to obtain the rotating speed signals. In another example, if position-free brushless motor control is adopted, the rotating speed signals may be no measured values but calculated values of a system algorithm.

The air volumes of the fans depend on the rotating speeds of the fans, so that the air volumes of the fans may be estimated according to the rotating speeds. A corresponding relationship between an air volume and a rotating speed of a single fan may be obtained by tests for inverse deduction, and the rotating speed signals may be determined as signals feeding back the air volumes.

The control system implements integrated air volume control of the plurality of fans. When the air volume of a single fan cannot meet an air volume required by the system, a form of combining the plurality of fans is adopted to maximally gather the air volumes.

According to a working stage of the air conditioning system, the control system may implement optimized real-time control to improve the comfort. For example, when the air conditioner is started for cooling or heating, the controller starts all the controlled fans to implement maximum air volume output to rapidly meet a temperature requirement set by the system. When the temperature reaches a value close to a set temperature, the controller may be switched into an energy-saving running state and properly turn off part of the fans for smooth transition.

Whether to turn off part of the fans in a subsequent stage or not is judged according to a current running rotating speed of each of the plurality of fans to improve energy efficiency and achieve energy saving. For example, in an optimized control method, only one fan is left running, and the rotating speed of the fan is close to a rated value. Therefore, a low-efficiency state that the multiple fans are simultaneously started but all work at relatively low rotating speeds may be avoided.

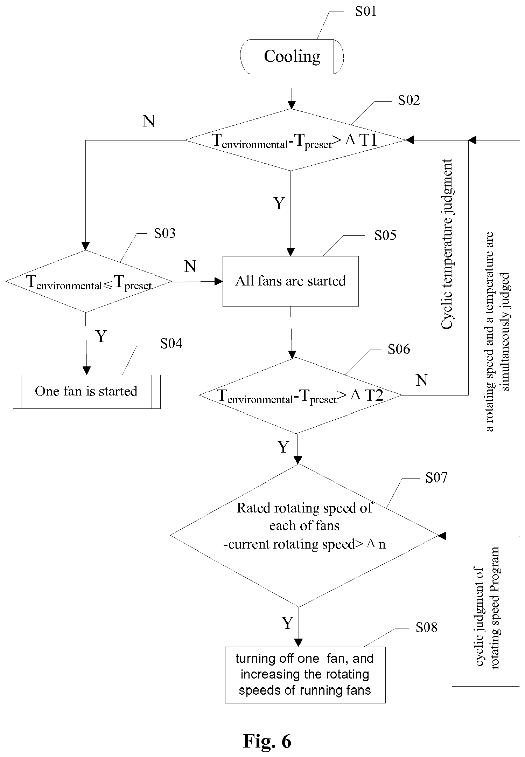

Fig. 6 is a flowchart of an air volume regulation method according to an embodiment of the invention. The air volume regulation method is described with a cooling process as an example. For example, a control system shown in Fig. 5 is adopted to execute the following air volume regulation method.

According to the air volume control method, a corresponding number of fans are started according to an air volume requirement of a system, and a rotating speed of each of the plurality of fans is controlled. If a maximum air volume of a single fan is W and a rotating speed of a corresponding motor is n, a maximum air volume of the air conditioning system is approximately Wₘₐₓ=N*W, where N is a number of internal fans. If the air volume requirement of the system is lower than W, one fan is started. For example, a controller 101 shown in Fig. 5 provides a control signal for a motor driver 201, then a motor M1 runs, and meanwhile, other motors stop working. Similarly, during running of the air conditioning system, according to a working stage and air volume requirement of the air conditioning system, different numbers of fans are started, and the rotating speed of each of the fans is controlled. An exemplary flow is implemented as follows.

In Step S01, the air conditioning system is started for cooling.

In Step S02, a temperature sensor is adopted to detect an environmental temperature Tₑₙᵥᵢᵣₒₙₘₑₙₜₐₗ and judge whether a temperature difference between the environmental temperature Tₑₙᵥᵢᵣₒₙₘₑₙₜₐₗ and a preset temperature Tpreset is larger than a first threshold value Δ T1 or not, if it is not larger than the first threshold value Δ T1, Step S03 is subsequently executed, and if it is larger than the first threshold value Δ T1, Step S05 is subsequently executed.

In Step S03, whether the environmental temperature Tₑₙᵥᵢᵣₒₙₘₑₙₜₐₗ is lower than Tpreset or not is judged, if Tₑₙᵥᵢᵣₒₙₘₑₙₜₐₗ is lower than Tpreset, one fan is started in Step S04, and if Tₑₙᵥᵢᵣₒₙₘₑₙₜₐₗ is not lower than Tpreset, Step S05 is subsequently executed.

In Step S05, all the fans are started.

In Step S06, after the fans run for a period of time, the temperature sensor is adopted to detect the environmental temperature Tₑₙᵥᵢᵣₒₙₘₑₙₜₐₗ and judge whether the temperature difference between the environmental temperature Tenvironmentai and Tpreset is larger than a second threshold value Δ T2 or not, the second threshold value Δ T2 being smaller than the first threshold value Δ T1, which namely indicates that the temperature difference is reduced, if it is not larger than the second threshold value Δ T2, Step S02 is re-executed, and if it is larger than the second threshold value Δ T2, Step S07 is subsequently executed.

In Step S07, a current rotating speed of each of the fans is obtained according to feedback signals of the motors, whether a difference value between a rated rotating speed and current rotating speed of each of the fans is larger than a third threshold value Δ n or not is judged, if it is larger than the third threshold value Δ n, Step S08 is subsequently executed, and if it is not larger than the third threshold value Δ n, Step S02 is re-executed.

In Step S08, one fan is turned off, and the rotating speeds of the other running fans are increased, thereby ensuring that the running fans work at speeds in the vicinity of the rated rotating speed and all the running fans maintain the air volume of the system.

In addition, those skilled in the art should know that the drawings provided here are all for description, and the drawings are not always drawn to scale.

In addition, it should be understood that the exemplary embodiments are provided to make the disclosure comprehensive and completely express its scope to those skilled in the art. Many specific details (such as examples of specific parts, equipment and methods) are given to provide a comprehensive understanding to the disclosure. Those skilled in the art should know that the exemplary embodiments may be implemented in various forms without specific details, and the exemplary embodiments should not be understood to limit the scope of the disclosure. In some exemplary embodiments, there are no detailed descriptions made to well-known equipment structures and well-known technologies.

When an element or layer is mentioned to be "on" another element or layer and "bonded", "connected" or "linked" onto the other element or layer, it may be directly on the other element or layer, directly bonded, connected to linked to the other element or layer, or a middle element or layer may exist. By comparison, when an element is mentioned to be "directly" "on" another element or layer, "directly bonded", "directly connected" or "directly linked" onto the other element or layer, an no middle element or layer may be required. Other words configured to describe a relationship between elements should be explained in a similar manner (for example "between" and "directly between", and "adjacent" and "directly adjacent"). For example, term "and/or", used here, includes any one or all combinations of one or more associated items which are listed.

Although terms first, second, third and the like may be adopted here to describe each element, part, region, layer and/or section, these elements, parts, regions, layers and/or sections should not be limited by these terms. These terms may only be adopt to distinguish one element, part, region, layer or section from another element, region, layer or section. Terms such as "first" and "second" and other numerical terms used here do not mean orders or sequences, unless explicitly specified in the context. Therefore, a first element, part, region, layer or section discussed below may be called as a second element, part, region, layer or section, without departing from the instruction of the exemplary embodiments. In addition, in the descriptions of the disclosure, "multiple" means two or more than two, unless otherwise noted. For easy description, space-related terms such as "in", "outside", "under", "below", "lower part", "above" and "upper part" are adopted here to describe a relationship between an element or characteristic and another element or characteristic shown in the drawings. It is understood that the space-related terms may be intended to include different orientations except orientations shown in the drawings during use or operation of equipment. For example, if the equipment in the drawings is overturned, an element described to be "below" or "under" another element or characteristic is to be positioned to be "above" the other element or characteristic. Therefore, the exemplary term "below" may include two directions above and below. The equipment may be oriented in another manner (rotating 90 degrees or at other orientations), and the space-related descriptors used here should be correspondingly explained.

Modifications, equivalent replacements, improvements and the like of the invention can be made as long as they fall within the scope of the protection of the invention which is solely defined by the appended claims.

## Claims

1. An air volume regulation method for an air volume regulation device, the air volume regulation device comprising: a fan system (1a) provided in a cabinet air conditioner, an upper air outlet (1b) provided in an upper part of the cabinet air conditioner, a lower air outlet (1c) provided in a lower part of the cabinet air conditioner and a control system,
wherein the fan system (1a) comprises a plurality of fans driven by motors respectively, and a port of each of the plurality of fans is communicated with a main air passage formed by at least a part of an air conditioner housing; and
the control system is configured to control each of the plurality of fans to execute at least one operation of starting, stopping and power regulation, thereby regulating an outlet air volume, the air volume regulation method comprising:
starting all fans or part of the fans according to an environmental temperature;
maintaining or reducing a number of the fans which have run according to a rotating speed of each of the fans; and
closing or opening the lower air outlet according to a running stage of the air conditioner;
the method **characterized in that**:
starting all the fans or part of the fans according to the environmental temperature comprises:
detecting the environmental temperature;
judging whether a temperature difference between the environmental temperature and a preset temperature is larger than a first threshold value or not;
if the temperature difference is larger than the first threshold value, starting all the fans;
if the temperature difference is not larger than the first threshold value and the environmental temperature does not exceed the preset temperature, starting all the fans; and
if the temperature difference is not larger than the first threshold value and the environmental temperature exceeds the preset temperature, starting part of the fans.

2. The method as claimed in claim 1, the air volume regulation device further comprising: an air door structure provided in a vicinity of the lower air outlet of the cabinet air conditioner and configured to open or close the lower air outlet.

3. The method as claimed in claim 2, wherein the air door structure comprises a baffle plate (3a), an air door motor (3b) and a rack (3c), the baffle plate (3a) is fixed at a tail end of the rack (3c), a driving gear of the air door motor (3b) is meshed with the rack(3c), and the rack (3c) is driven by the air door motor (3b) to cause the baffle plate (3a) to move to different positions along with the rack (3c).

4. The method as claimed in claim 1, wherein the control system comprises:
an input provision device (102), used for acquiring a user instruction;
a temperature sensor (103), used for acquiring a sensing signal representative of an environmental temperature;
a plurality of motor drivers (201-20N), connected with a plurality of motors respectively and used for providing power supply voltages for the corresponding motors and acquiring feedback signals from the motors; and
a controller (101), receiving the user instruction from the input provision device (102) and receiving the sensing signal from the temperature sensor (103) respectively, generating a control signal according to the received user instruction and sensing signal and providing the control signal for the plurality of motor drivers (201-20N) to control running of the plurality of motors.

5. The method as claimed in claim 4, wherein the control system starts a corresponding number of fans and/or control a rotating speed of each of fans according to an air volume requirement of a system.

6. The method as claimed in claim 1, wherein the plurality of fans comprises:
a first group of fans, provided at an upper part of the main air passage, provided with an upper port and configured to provide an airflow blown from the upper air outlet; and
a second group of fans, provided at a lower part of the main air passage, provided with a lower port and configured to provide an airflow blown from the lower air outlet.

7. The method as claimed in claim 6, wherein the plurality of fans further comprise:
a third group of fans, provided at a middle part of the main air passage, provided with an upper port and a lower port and configured to simultaneously provide airflows blown from the upper air outlet (1b) and the lower air outlet (1c).

8. The method as claimed in claim 1, wherein whether the temperature difference is reduced or not is judged, passing a predetermined time after all the fans are started, and a step of maintaining or reducing the number of the fans which have run according to the rotating speed of each of the fans is executed only when the temperature difference has been reduced.

9. The method as claimed in claim 8, wherein maintaining or reducing the number of the fans which have run according to the rotating speed of each of the fans comprises:
detecting the rotating speed of each of the fans;
judging whether a rotating speed difference between the rotating speed of each of the fans and a rated rotating speed is larger than a second threshold value or not;
if the rotating speed difference is larger than the second threshold value, turning off at least one of the fans, and increasing the rotating speeds of the other fans; and
if the rotating speed difference is not larger than the second threshold value, starting all the fans or part of the fans according to the environmental temperature.

10. The method as claimed in claim 9, wherein the rotating speed of each of the fans is acquired according to feedback signals of motors.

## Patentansprüche

1. Luftvolumenregelungsverfahren für eine Luftvolumenregelungsvorrichtung, indem die Luftvolumenregelungsvorrichtung Folgendes umfasst: ein Gebläsesystem (1a) bereitgestellt in einer Kastenklimaanlage, einen oberen Luftausgang (1b) bereitgestellt in einem oberen Teil der Kastenklimaanlage, einen unteren Luftausgang (1c) bereitgestellt in einem unteren Teil der Kastenklimaanlage und ein Steuersystem,
wobei das Gebläsesystem (1a) eine Mehrheit von jeweiligen von Motoren angetriebenen Gebläsen umfasst, und ein Anschluss für jedes der Mehrheit von Gebläsen mit einem Hauptluftdurchgang in Verbindung steht, der durch mindestens einen Teil eines Klimaanlagegehäuses gebildet ist; und das Steuersystem zum Steuern jedes der Mehrheit von Gebläsen ausgelegt ist zum Ausführen mindestens eines Vorgangs zum Einschalten, Anhalten und zur Leistungsregelung, wodurch ein Ausgangsluftvolumen geregelt wird, indem das Luftvolumenregelungsverfahren Folgendes umfasst:
Einschalten von allen Gebläsen oder einem Teil der Gebläse gemäß einer Umgebungstemperatur;
Aufrechterhalten oder Verringern einer Anzahl der Gebläse, die gemäß einer Umdrehungsgeschwindigkeit jedes der Gebläse in Betrieb gewesen sind; und
Schließen oder Öffnen des unteren Luftausgangs gemäß einer Betriebsstufe der Klimaanlage;
welches Verfahren **dadurch gekennzeichnet ist, dass:**
das Einschalten von allen Gebläsen oder einem Teil der Gebläse gemäß der Umgebungstemperatur Folgendes umfasst:
Detektieren der Umgebungstemperatur;
Beurteilen ob ein Temperaturunterschied zwischen der Umgebungstemperatur und einer voreingestellten Temperatur größer als ein erster Schwellenwert ist oder nicht;
wenn der Temperaturunterschied größer als der erste Schwellenwert ist, Einschalten von allen Gebläsen;
wenn der Temperaturunterschied nicht größer als der erste Schwellenwert ist und die Umgebungstemperatur die voreingestellte Temperatur nicht überschreitet, Einschalten von allen Gebläsen; und
wenn der Temperaturunterschied nicht größer als der erste Schwellenwert ist und die Umgebungstemperatur die voreingestellte Temperatur überschreitet, Einschalten eines Teils der Gebläse.

2. Verfahren nach Anspruch 1, indem die Luftvolumenregelungsvorrichtung weiter Folgendes umfasst: eine Lufttürstruktur bereitgestellt in der Nähe des unteren Luftausgangs der Kastenklimaanlage und ausgelegt zum Öffnen und Schließen des unteren Luftausgangs.

3. Verfahren nach Anspruch 2, wobei die Lufttürstruktur ein Leitblech (3a), einen Lufttürmotor (3b) und ein Gestell (3c) umfasst, indem das Leitblech (3a) an einem Endstück des Gestells (3c) befestigt ist, ein Triebwerk des Lufttürmotors (3b) mit dem Gestell (3c) in Eingriff ist, und das Gestell (3c) durch den Lufttürmotor (3b) getrieben wird, damit das Leitblech (3a) sich zu verschiedenen Positionen entlang dem Gestell (3c) bewegt.

4. Verfahren nach Anspruch 1, wobei das Steuersystem Folgendes umfasst:
eine Eingabebereitstellungsvorrichtung (102), angewendet zum Erlangen einer Benutzeranweisung;
einen Temperatursensor (103), angewendet zum Erlangen eines Erkennungssignals, das eine Umgebungstemperatur darstellt;
eine Mehrheit von Motortreibern (201-20N), die jeweils mit einer Mehrheit von Motoren verbunden sind und zum Bereitstellen von Leistungsversorgungsspannungen für die entsprechenden Motoren und Erlangen von Rückmeldesignalen von den Motoren angewendet werden; und
eine Steuereinheit (101), die jeweils die Benutzeranweisung von der Eingabebereitstellungsvorrichtung (102) empfängt und das Erkennungssignal vom Temperatursensor (103) empfängt, ein Steuersignal gemäß der empfangenen Benutzeranweisung und Erkennungssignal erzeugt und das Steuersignal für die Mehrheit von Motortreibern (201-20N) zum Steuern des Betriebs der Mehrheit von Motoren bereitstellt.

5. Verfahren nach Anspruch 4, wobei das Steuersystem eine entsprechende Anzahl von Gebläsen einschaltet und/oder eine Umdrehungsgeschwindigkeit jedes der Gebläse gemäß einer Luftvolumenanforderung eines Systems steuert.

6. Verfahren nach Anspruch 1, wobei die Mehrheit von Gebläsen Folgendes umfasst:
eine erste Gruppe von Gebläsen, bereitgestellt an einem oberen Teil des Hauptluftdurchgangs, versehen mit einem oberen Anschluss und ausgelegt zum Bereitstellen einer Luftströmung, die vom oberen Luftausgang geblasen wird; und
eine zweite Gruppe von Gebläsen, bereitgestellt an einem unteren Teil des Hauptluftdurchgangs, versehen mit einem unteren Anschluss und ausgelegt zum Bereitstellen einer Luftströmung, die vom unteren Luftausgang geblasen wird.

7. Verfahren nach Anspruch 6, wobei die Mehrheit von Gebläsen weiter Folgendes umfasst:
eine dritte Gruppe von Gebläsen, bereitgestellt an einem mittleren Teil des Hauptluftdurchgangs, versehen mit einem oberen Anschluss und einem unteren Anschluss und ausgelegt zum gleichzeitigen Bereitstellen von Luftströmungen, die vom oberen Luftausgang (1b) und unteren Luftausgang (1c) geblasen werden.

8. Verfahren nach Anspruch 1, wobei es beurteilt wird, ob der Temperaturunterschied verringert ist oder nicht, vergehen lassen eines vorbestimmten Zeitraums nachdem alle Gebläse eingeschaltet sind, und ein Schritt zum Aufrechterhalten oder Verringern der Anzahl der Gebläse, die gemäß der Umdrehungsgeschwindigkeit jedes der Gebläse in Betrieb gewesen sind, nur ausgeführt wird, wenn der Temperaturunterschied verringert worden ist.

9. Verfahren nach Anspruch 8, wobei das Aufrechterhalten oder Verringern der Anzahl der Gebläse, die gemäß der Umdrehungsgeschwindigkeit jedes der Gebläse in Betrieb gewesen sind, Folgendes umfasst:
Detektieren der Umdrehungsgeschwindigkeit jedes der Gebläse;
Beurteilen ob ein Umdrehungsgeschwindigkeitsunterschied zwischen der Umdrehungsgeschwindigkeit jedes der Gebläse und einer Nennumdrehungsgeschwindigkeit größer als ein zweiter Schwellenwert ist oder nicht;
wenn der Umdrehungsgeschwindigkeitsunterschied größer als der zweite Schwellenwert ist, Ausschalten mindestens eines der Gebläse und Erhöhen der Umdrehungsgeschwindigkeiten der anderen Gebläse; und
wenn der Umdrehungsgeschwindigkeitsunterschied nicht größer als der zweite Schwellenwert ist, Einschalten von allen Gebläsen oder einem Teil der Gebläse gemäß der Umgebungstemperatur.

10. Verfahren nach Anspruch 9, wobei die Umdrehungsgeschwindigkeit jedes der Gebläse gemäß Rückmeldesignale von Motoren erlangt wird.

## Revendications

1. Procédé de régulation de volume d'air pour un dispositif de régulation de volume d'air,
le dispositif de régulation de volume d'air comprenant : un système de ventilateur (1a) prévu dans un climatiseur d'armoire, une sortie d'air supérieure (1b) prévue dans une partie supérieure du climatiseur d'armoire, une sortie d'air inférieure (1c) prévue dans une partie inférieure du climatiseur d'armoire et un système de commande,
dans lequel le système de ventilateur (1a) comprend une pluralité de ventilateurs entraînés par des moteurs respectivement, et un orifice de chacun de la pluralité de ventilateurs est en communication avec un passage d'air principal formé par au moins une partie d'un logement de climatiseur ; et le système de commande est configuré pour commander chacun de la pluralité de ventilateurs pour exécuter au moins une opération de démarrage, d'arrêt et de régulation de puissance, régulant ainsi un volume d'air de sortie, le procédé de régulation de volume d'air comprenant :
le démarrage de tous les ventilateurs ou d'une partie des ventilateurs en fonction d'une température ambiante ; le maintien ou la réduction d'un nombre de ventilateurs qui ont été en service en fonction d'une vitesse de rotation de chacun des ventilateurs ; et
la fermeture ou l'ouverture de la sortie d'air inférieure selon une phase de fonctionnement du climatiseur :
le procédé est **caractérisé en ce que** :
le démarrage de tous les ventilateurs ou d'une partie des ventilateurs en fonction de la température ambiante comprend les étapes consistant à :
détecter la température ambiante ;
juger si une différence de température entre la température ambiante et une température prédéfinie est supérieure ou non à une première valeur seuil ;
si la différence de température est supérieure à la première valeur seuil, démarrer tous les ventilateurs ;
si la différence de température n'est pas supérieure à la première valeur seuil et la température ambiante ne dépasse pas la température prédéfinie, démarrer tous les ventilateurs ; et
si la différence de température n'est pas supérieure à la première valeur seuil et la température ambiante dépasse la température prédéfinie, démarrer une partie des ventilateurs.

2. Procédé selon la revendication 1, dans lequel le dispositif de régulation de volume d'air comprend en outre : une structure de porte d'air prévue à proximité de la sortie d'air inférieure du climatiseur d'armoire et configurée pour ouvrir ou fermer la sortie d'air inférieure.

3. Procédé selon la revendication 2, dans lequel la structure de porte d'air comprend une plaque déflectrice (3a), un moteur de porte d'air (3b) et une crémaillère (3c), la plaque déflectrice (3a) est fixée au niveau d'une extrémité arrière de la crémaillère (3c), un engrenage d'entraînement du moteur de porte d'air (3b) est engrené avec la crémaillère (3c), et la crémaillère (3c) est entraînée par le moteur de porte d'air (3b) pour amener la plaque déflectrice (3a) à se déplacer dans différentes positions conjointement avec la crémaillère (3c).

4. Procédé selon la revendication 1, dans lequel le système de commande comprend :
un dispositif de fourniture d'entrée (102), utilisé pour acquérir une instruction utilisateur ;
un capteur de température (103), utilisé pour acquérir un signal de détection représentatif d'une température environnementale ;
une pluralité de pilotes de moteur (201-20N), respectivement connectés à une pluralité de moteurs et utilisés pour fournir des tensions d'alimentation électrique pour les moteurs correspondants et acquérir des signaux de rétroaction à partir des moteurs ; et
un contrôleur (101) respectivement recevant l'instruction d'utilisateur du dispositif de fourniture d'entrée (102) et recevant le signal de détection du capteur de température (103), générant un signal de commande selon l'instruction d'utilisateur et le signal de détection reçus et fournissant le signal de commande pour la pluralité de pilotes de moteur (201-20N) pour commander le fonctionnement de la pluralité de moteurs.

5. Procédé selon la revendication 4, dans lequel le système de commande démarre un nombre correspondant de ventilateurs et / ou commande une vitesse de rotation de chacun des ventilateurs selon une exigence de volume d'air d'un système.

6. Procédé selon la revendication 1, dans lequel la pluralité de ventilateurs comprend :
un premier groupe de ventilateurs, prévu au niveau d'une partie supérieure du passage d'air principal, prévu avec un orifice supérieur et configuré pour fournir un flux d'air soufflé depuis la sortie d'air supérieure ; et
un deuxième groupe de ventilateurs, prévu au niveau d'une partie inférieure du passage d'air principal, prévu avec un orifice inférieur et configuré pour fournir un flux d'air soufflé depuis la sortie d'air inférieure.

7. Procédé selon la revendication 6, dans lequel la pluralité de ventilateurs comprend en outre :
un troisième groupe de ventilateurs, prévu au niveau d'une partie médiane du passage d'air principal, prévu avec un orifice supérieur et un orifice inférieur et configuré pour fournir simultanément des flux d'air soufflés depuis la sortie d'air supérieure (1b) et la sortie d'air inférieure (1c).

8. Procédé selon la revendication 1, dans lequel si la différence de température est censée réduite ou non, en passant un temps prédéterminé après le démarrage de tous les ventilateurs, et une étape de maintien ou de réduction du nombre des ventilateurs qui ont été en service en fonction de la vitesse de rotation de chacun des ventilateurs est exécutée uniquement lorsque la différence de température a été réduite.

9. Procédé selon la revendication 8, dans lequel le maintien ou la réduction du nombre de ventilateurs qui ont été en service en fonction de la vitesse de rotation de chacun des ventilateurs comprend les étapes consistant à :
détecter la vitesse de rotation de chacun des ventilateurs ;
juger si une différence de vitesse de rotation entre la vitesse de rotation de chacun des ventilateurs et une vitesse de rotation nominale est supérieure ou non à une deuxième valeur de seuil ;
si la différence de vitesse de rotation est supérieure à la deuxième valeur seuil, éteindre au moins l'un des ventilateurs, et augmenter les vitesses de rotation des autres ventilateurs; et
si la différence de vitesse de rotation n'est pas supérieure à la deuxième valeur de seuil, démarrer tous les ventilateurs ou une partie des ventilateurs en fonction de la température ambiante.

10. Procédé selon la revendication 9, dans lequel la vitesse de rotation de chacun des ventilateurs est acquise en fonction de signaux de rétroaction de moteurs.
